Europäisches Patentamt

European Patent Office

Office européen des brevets

(19)

(11) Veröffentlichungsnummer: **0 047 819**
**B1**

(12) **EUROPÄISCHE PATENTSCHRIFT**

(45) Veröffentlichungstag der Patentschrift:
11.10.89

(21) Anmeldenummer: 81105052.5

(22) Anmeldetag: 30.06.81

(51) Int. Cl.⁴: **B 60 L   5/32**, B 60 L   5/26

(54) Zweistufiger Scherenstromabnehmer.

(30) Priorität: 05.09.80 DE 3033449

(43) Veröffentlichungstag der Anmeldung:
24.03.82 Patentblatt 82/12

(45) Bekanntmachung des Hinweises auf die Patenterteilung: 11.10.89 Patentblatt 89/41

(84) Benannte Vertragsstaaten:
FR GB IT

(56) Entgegenhaltungen:
DE–A– 1 763 338
DE–A– 2 037 686
FR–A– 1 421 371
FR–A– 2 166 153
GB–A– 1 247 776

(73) Patentinhaber: **Messerschmitt-Bölkow-Blohm Gesellschaft mit beschränkter Haftung**
**Robert-Koch-Strasse**
**D-8012 Ottobrunn (DE)**

(72) Erfinder: **Meisinger, Reinhold, Dr.**
**Ringbergstrasse 59**
**D-8029 Sauerlach (DE)**
Erfinder: **Leo, Rolf, Dipl.-Ing.**
**Im Steinfeld 6**
**D-8206 Bruckmühl (DE)**

## Beschreibung

Die Erfindung betrifft einen zweistufigen Scherenstromabnehmer, mit einer über eine Stromabnehmerwippe an einer Fahrleitung anliegenden, bezüglich dieser auf konstante Kontaktkraft geregelten oberen Schere, einer diese tragenden Hauptschere, einer ersten, der oberen Schere zugeordneten Stellvorrichtung, einer an diese zur Konstanthaltung der Kontaktkraft Stellsignale abgebenden Regelvorrichtung sowie einer zweiten, der Hauptschere zugeordneten Stellvorrichtung.

Ein derartiger Scherenstromabnehmer ist aus der FR-A-2 166 153 bekannt. Die beiden Stufen des Stromabnehmers werden dort von einer auf dem Fahrzeugdach montierten Hauptschere sowie einer an dieser angebrachten, mittels einer Stromabnehmerwippe an der Fahrleitung anliegenden oberen Schere gebildet. Der Stellweg der oberen Schere wird dabei von einer Regelvorrichtung nebst zugeordneter Stellvorrichtung so eingeregelt, daß die Kontaktkraft, mit der die Stromabnehmerwippe an die Fahrleitung gedrückt wird, während des Betriebes möglichst weitgehend konstant bleibt. Die Hauptschere wird mit Hilfe einer weiteren Stellvorrichtung in einer bestimmten, von der mittleren Höhe der Fahrleitung abhängigen Stellung verriegelt, so daß ihre Stellung während der Fahrt konstant bleibt. Höhenänderungen und Schwingungen der Fahrleitung werden allein durch Regelung des Stellweges der oberen Schere ausgeglichen. Diese sowie die zugeordnete Stellvorrichtung müssen demnach für relativ große Stellwege ausgelegt sein. Der Arbeitsbereich beträgt dabei ca. ± 20 cm senkrecht zur Fahrleitung. Folglich ergibt sich bei dem bekannten Scherenstromabnehmer die Schwierigkeit, daß bei sehr schneller Fahrt auftretende, relativ hochfrequente Schwingungen von der Stellvorrichtung nur noch unvollständig ausgeglichen werden können, da diese bei den genannten Frequenzen nicht mehr in der Lage ist, die erforderlichen Stellwege voll auszufahren. Die höchstzulässige Fahrgeschwindigkeit liegt daher entsprechend niedrig. Als weiterer Nachteil ergibt sich, daß beim Wechsel auf eine Trasse mit veränderter Höhe der Fahrleitung die Hauptschere jedesmal entriegelt und in einer neuen Stellung eingerastet werden muß. Überdies ist die Fahrt auf normalen, nicht speziell für Hochgeschwindigkeitsbahnen konzipierten Streckennetzen nicht möglich, da dort immer wieder relativ starke Absenkungen und Anhebungen der Fahrleitung auftreten, und zwar aufgrund von Unterführungen und Brücken.

Weiterhin ist aus der FR-A-1421371 ein Stromabnehmer für Fahrleitungen bekannt, der ebenfalls zwei stufig ist und mit einer Stromabnehmerwippe an der Fahrleitung anliegt. Einer Hauptschere (Hauptstruktur mit Zwischenhalterungen) ist eine Stellvorrichtung zugeordnet, welche nach Maßgabe entweder des Druckes zwischen Fahrleitung und Stromabnehmerwippe oder der Beschleunigung der die Stromabnehmerwippe tragenden oberen Schere (Hilfsstruktur) verstellt wird. Zwischen der Hauptschere und der oberen Schere wirkt im wesentlichen eine Federkraft. Der Einfluß der Massenträgheit der oberen Schere auf die Änderung des Kontaktdruckes in Abhängigkeit von der Höhenänderung des Fahrdrahtes kann teilweise dadurch kompensiert werden, daß die auf die obere Schere einwirkende Stellkraft als Funktion von deren Beschleunigung beeinflußt wird.

Der Erfindung liegt die Aufgabe zugrunde, einen zweistufigen Scherenstromabnehmer der eingangs genannten Art bereitzustellen, der sowohl flexibel auf deutliche Veränderungen der Fahrleitungshöhe reagiert als auch bei sehr hohen Fahrgeschwindigkeiten in der Lage ist, eine konstante Kontaktkraft zur Fahrleitung beizubehalten.

Diese Aufgabe wird gemäß der Erfindung dadurch gelöst, daß eine zweite Regelvorrichtung vorgesehen ist, die der zweiten Stellvorrichtung zur Aufrechterhaltung eines im zeitlichen Mittel konstanten, als Sollwert vorgebbaren Stellweges der ersten Stellvorrichtung Stellsignale liefert, und der als Meßgrößen der Istwert des Stellweges der ersten Stellvorrichtung und der Istwert der Beschleunigung der Hauptschere zugeführt werden, wobei die Stellsignale für die zweite Stellvorrichtung mit Hilfe einer linearen additiven Funktion aus dem Istwert dieser Beschleunigung und der Differenz zwischen Ist und Sollwert des Stellweges der ersten Stellvorrichtung abgeleitet werden.

Die Hauptschere wird demnach nicht mehr verriegelt, vielmehr wird ihre Stellung kontinuierlich so geregelt, daß der Stellweg der oberen Schere im Mittel konstant gehalten wird. Dies hat zur Folge, daß eine Arbeitsteilung zwischen beiden Stufen des Scherenstromabnehmers in dem Sinne eintritt, daß niederfrequente Schwingungen relativ großer· Amplitude von der Hauptschere aufgenommen und ausgeregelt werden, während hochfrequente Schwingungen relativ kleiner Amplitude von der der oberen Schere zugeordneten Stellvorrichtung verarbeitet werden. Diese kann nun nämlich für wesentlich geringere Stellwege ausgelegt werden, als es bei dem bekannten Scherenstromabnehmer möglich ist. Infolgedessen können hohe Schwingungsfrequenzen von der oberen Schere optimal verarbeitet werden. Dabei oszilliert die obere Schere innerhalb eines relativ engen Toleranzbereiches um einen im zeitlichen Mittel konstanten Stellweg. Niedere Frequenzen werden, insbesondere wenn sie mit größeren Amplituden auftreten, von der Hauptschere verarbeitet.

Der Scherenstromabnehmer ist damit nicht nur in der Lage, bei höheren Fahrgeschwindigkeiten auftretende höhere Frequenzen unter Konstanthaltung der Kontaktkraft zur Fahrleitung zu verarbeiten. Er reagiert auch flexibel auf Änderungen der mittleren Fahrleitungshöhe, so daß durch die automatisch erfolgende Nachregelung der Hauptschere ein Wechsel der Trasse ohne weiteres möglich ist.

Zwar ist aus der DE-A-1 763 338 ebenfalls ein Scherenstromabnehmer bekannt, der eine Hauptschere und eine obere Schere aufweist, und bei dem die Hauptschere in ihrer Höhe durch eine Stellvorrichtung verstellt werden kann, wobei diese Stellvorrichtung durch eine ihr zugeordnete Regelvorrichtung mit Stellsignalen beaufschlagt wird, welche vom jeweiligen Istwert des Stellweges der oberen Schere abhängen. Dieser Scherenstromabnehmer unterscheidet sich jedoch insofern von dem der eingangs genannten Art, daß für die obere Schere zwar eine Stellvorrichtung in Form einer vorgespannten Feder vorgesehen ist, jedoch keine diese auf konstante Kontaktkraft regelnde Regelvorrichtung. Bei einer derartigen passiven Federung der oberen Schere treten gewisse Probleme nicht auf, die sich bei einer dynamischen Regelung einstellen, wie sie bei einem Scherenstromabnehmer der eingangs genannten Art gefordert ist. Dabei ist nämlich von ausschlaggebender Bedeutung, daß sehr hohe Stell- und Reaktionskräfte auftreten können, die durch eine geeignete Art der Regelung so weit wie möglich in Grenzen zu halten sind.

Hier greift nun das zusätzliche Merkmal der Erfindung ein, wonach der zweiten, der Hauptschere bzw. deren Stellvorrichtung zugeordneten Regelvorrichtung neben dem Istwert des Stellweges der ersten Stellvorrichtung als zusätzliche Meßgröße der Istwert der Beschleunigung der Hauptschere zugeführt wird. Dieses Merkmal ist entscheidend für eine einwandfreie Funktion des erfindungsgemäßen Scherenstromabnehmers. Die Rückführung der Beschleunigung wirkt nämlich regelungstechnisch wie eine fiktive Vergrößerung der Hauptscherenmasse.

Die Stellsignale für die zweite, der Hauptschere zugeordnete Stellvorrichtung werden mit Hilfe einer linearen additiven Funktion aus der Beschleunigung der Hauptschere und der Differenz zwischen Ist- und Sollwert des Stellweges der ersten, der oberen Schere zugeordneten Stellvorrichtung abgeleitet.

Der genannte Sollwert entspricht dem anzustrebenden zeitlichen Mittel des Stellweges der ersten Stellvorrichtung. Die Regelung der Hauptschere muß so ausgebildet sein, daß bei Schwingungen kleiner Amplitude um diesen Sollwert des Stellweges der ersten Stellvorrichtung herum keine Stellsignale an die zweite Stellvorrichtung abgegeben werden. Bei in einer Richtung erfolgenden Änderungen des Stellweges wird zunächst zur Konstanthaltung der Kontaktkraft zur Fahrleitung die obere Schere nachgeführt, und zwar mit Hilfe der ersten Stellvorrichtung, und danach wird die Hauptschere von der zweiten Stellvorrichtung so weit nachgeregelt, daß der Sollwert des Stellweges der ersten Stellvorrichtung wieder erreicht wird. Die Zeit, innerhalb der die Nachregelung einsetzt, ist dabei so kurz, daß der Bereich, der für die Regelung der oberen Schere durch die erste Stellvorrichtung zur Verfügung steht, nicht verlassen wird.

Da alle Teile der Hauptschere in räumlich eindeutiger Weise miteinander in Beziehung stehen, ist es prinzipiell gleichgültig, an welcher Stelle der Hauptschere dieser Istwert abgenommen wird.

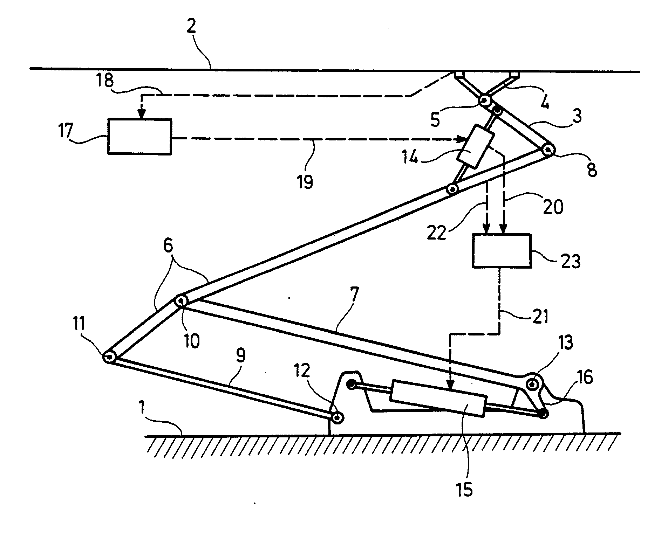

Im folgenden wird ein Ausführungsbeispiel der Erfindung anhand der Figur näher erläutert.

Zwischen dem Dach 1 eines elektrisch betriebenen Fahrzeuges, insbesondere eines Schienenfahrzeuges, und einer Fahrleitung 2 befindet sich ein zweistufiger Scherenstromabnehmer. Die eine Stufe besteht aus einem die obere Schere repräsentierenden Holm 3 mit einer auf diesem im Punkt 5 drehbar gelagerten Stromabnehmerwippe 4. Die andere Stufe besteht aus den die Hauptschere bildenden Scherenarmen 6 und 7. Der Scherenarm 6 ist im Drehpunkt 8 mit der oberen Schere und in den Drehpunkten 10 und 11 sowohl mit dem Scherenarm 7 als auch mit einer Stange 9 verbunden. Scherenarm 7 und Stange 9 sind in den Punkten 12 und 13 drehbar gelagert. Ein die zweite Stellvorrichtung repräsentierender Stellmotor 15 wirkt auf einen Hebelarm 16. Sobald der Stellmotor 15 seinen Hub verkürzt, wird der Hebelarm 16 um den Drehpunkt 13 im Uhrzeigersinn gedreht sowie als Folge davon der Drehpunkt 8 angehoben. Umgekehrt wird bei Verlängerung des Stellweges des Stellmotors 15 der Drehpunkt 8 abgesenkt.

Über eine Meßleitung 18 werden einer ersten Regelvorrichtung 17 Meßsignale zugeführt, die der zwischen den Stromabnehmerkontakten der Stromabnehmerwippe 4 und der Fahrleitung 2 herrschenden Kontaktkraft entsprechen. Über eine Signalleitung 19 liefert die Regelvorrichtung 17 Stellsignale an einen die erste Stellvorrichtung repräsentierenden Stellmotor 14. Dieser wird so geregelt, daß die Kontaktkraft zwischen oberer Schere und Fahrleitung möglichst konstant gehalten wird. Der jeweilige Istwert des Stellweges des Stellmotors 14 wird laufend gemessen und über eine Meßleitung 20 einer zweiten Regelvorrichtung 23 zugeführt. Über eine weitere Meßleitung 22 werden zusätzlich der momentanen Beschleunigung der Hauptschere entsprechende Meßsignale an die Regelvorrichtung 16 übertragen. Diese ermittelt aus der Beschleunigung sowie aus dem Vergleich des Istwertes des Stellweges von Stellmotor 14 mit einem vorher eingegebenen Sollwert gemäß einer linearen additiven Funktion Stellsignale für den Stellmotor 15, die diesem über eine Signalleitung 21 zugeführt werden. Sobald eine Istwert-Sollwert-Abweichung auftritt und länger als eine definierte Mindestzeit andauert, wird die Hauptschere mit Hilfe des Stellmotors 15 nachgeregelt.

## Patentanspruch

Zweistufiger Scherenstromabnehmer, mit einer über eine Stromabnehmerwippe (4) an einer Fahrleitung (2) anliegenden, bezüglich dieser auf konstante Kontaktkraft geregelten oberen Schere, einer diese tragenden Hauptschere (6, 7), einer ersten, der oberen Schere zugeordneten Stellvorrichtung (14), einer an diese zur Konstanthaltung der Kontaktkraft Stellsignale abgebenden Regelvorrichtung (17) sowie einer zweiten, der Hauptschere (6, 7) zugeordneten Stellvorrichtung (15), gekennzeichnet durch eine zweite Regelvorrichtung (23), die der zweiten Stellvorrichtung (15) zur Aufrechterhaltung eines im zeitlichen Mittel konstanten, als Sollwert vorgebbaren Stellweges der ersten Stellvorrichtung (14) Stellsignale liefert, und der als Meßgrößen der Istwert des Stellweges der ersten Stellvorrichtung (14) und der Istwert der Beschleunigung der Hauptschere (6, 7) zugeführt werden, wobei die Stellsignale für die zweite Stellvorrichtung (15) mit Hilfe einer linearen additiven Funktion aus dem Istwert dieser Beschleunigung und der Differenz zwischen Ist- und Sollwert des Stellweges der ersten Stellvorrichtung (14) abgeleitet werden.

## Claim

A two-stage pantograph, with an upper fork bearing with regulated constant contacting force through a current collector rocker (4) on an overhead power line (2), a main fork (6, 7) carrying aforesaid upper fork, a first adjusting device (14) associated with the upper fork, a control device (17) transmitting adjustment signals to said adjusting device for maintaining constant the said contacting force, as well as a second adjusting device (15) associated with tne main fork (6, 7), characterised in and by a second control device (23) which supplies to the second adjusting device (15) control signals for maintaining a temporally averaged adjusting distance of the first adjusting device (14) to act as preset nominal value and to which are fed as measured quantities the actual value of the adjusting distance of the first adjusting device (14) and the actual value of the acceleration of the main fork (6, 7), and in which the control signals for the second adjusting device (15) are derived with the aid of an additive linear function from the actual value of this acceleration and the difference between the actual and nominal values of the adjusting distance of the first adjusting device (14).

## Revendication

Dispositif de captage de courant à pantographe à deux étages, comprenant des ciseaux supérieurs portant par un archet (4) contre un fil de contact (2) et réglés par rapport à ce dernier en vue d'une force de contact constante, des ciseaux principaux (6, 7) portant les ciseaux supérieurs, un premier dispositif de commande (14) associé aux ciseaux supérieurs, un dispositif de régulation (17) fournissant des signaux de commande en vue de maintenir constante la force de contact, ainsi qu'un deuxième dispositif de commande (15) associé aux ciseaux principaux (6, 7), caractérisé par un deuxième dispositif de régulation (23) qui fournit des signaux de commande au deuxième dispositif de commande (15) en vue de maintenir constante, au premier dispositif de commande (14), une course de commande prédéterminable en tant que valeur de consigne et constante en moyenne dans le temps, et auquel sont appliquées, en tant que grandeurs mesurées, la valeur réelle de la course de commande du premier dispositif de commande (14) et la valeur réelle de l'accélération des ciseaux principaux (6, 7), les signaux de commande pour le deuxième dispositif de commande (15) étant dérivés au moyen d'une fonction additive linéaire de la valeur réelle de cette accélération et de la différence entre la valeur réelle et la valeur de consigne de la course de commande du premier dispositif de commande (14).